(19) Europäisches Patentamt / European Patent Office / Office européen des brevets

(11) **EP 2 309 289 B1**

(12) **FASCICULE DE BREVET EUROPEEN**

(45) Date de publication et mention
de la délivrance du brevet:
**28.03.2012 Bulletin 2012/13**

(51) Int Cl.:
***G01S 7/02*** *(2006.01)*

(21) Numéro de dépôt: **10176487.6**

(22) Date de dépôt: **13.09.2010**

(54) **Procédé de séparation de trains d'impulsions radar imbriquées**

Verfahren zum Trennen von verschachtelten Radar-Puls-Folgen

Method for separating interleaved radar puls sequences

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **25.09.2009 FR 0904600**

(43) Date de publication de la demande:
**13.04.2011 Bulletin 2011/15**

(73) Titulaire: **Thales
92200 Neuilly Sur Seine (FR)**

(72) Inventeur: **Sentenac, Nicolas
78300 Poissy (FR)**

(74) Mandataire: **Collet, Alain et al
Marks & Clerk France
Conseils en Propriété Industrielle
Immeuble Visium
22, Avenue Aristide Briand
94117 Arcueil Cedex (FR)**

(56) Documents cités:
**US-A- 5 396 250       US-A- 5 583 505
US-B1- 7 397 415**

• **MARDIA H K: "NEW TECHNIQUES FOR THE
DEINTERLEAVING OF REPETITIVE
SEQUENCES" IEE PROCEEDINGS F.
COMMUNICATIONS, RADAR &
SIGNALPROCESSING, INSTITUTION OF
ELECTRICAL ENGINEERS. STEVENAGE, GB,
vol. 136, no. 4, PART F, 1 août 1989 (1989-08-01),
pages 149-154, XP000052595 ISSN: 0956-375X**

**Description**

L'invention concerne un procédé de séparation de trains d'impulsions radar imbriqués. Elle s'applique en particulier en présence de plusieurs trains d'impulsions dont les périodes de répétition des impulsions sont proches ou lorsque la période de répétition des impulsions d'un train fluctue de manière aléatoire ou pseudo-aléatoire autour d'une valeur moyenne.

Les dispositifs, dont la fonction est de surveiller les émissions des radars, requièrent de pouvoir séparer et caractériser chaque émission dans le flux total correspondant à l'ensemble des émissions présentes reçues, et en particulier quand celles-ci sont localement imbriquées, c'est-à-dire imbriquées dans un laps de temps court correspondant sensiblement à tout ou partie d'une durée d'illumination.

Une première technique pour séparer un train d'impulsions appartenant à un radar donné, du flux complet de toutes les impulsions reçues, est fondée sur la construction d'histogrammes de différences de temps d'arrivée, ou Différence of Time Of Arrival (DTOA) selon l'expression anglo-saxonne, des impulsions successives. Cette technique fonctionne bien en présence de signaux radar dont les périodes de répétition des impulsions (PRI) sont relativement espacées les unes des autres et restent constantes. En revanche, cette technique n'est pas robuste aux fluctuations des PRI, surtout en présence de plusieurs signaux radar localement imbriqués et dont les PRI moyennes sont relativement proches. De même, lorsque le nombre d'impulsions est relativement réduit, la distribution des fluctuations ne peut être décrite par l'histogramme de manière continue. Il est alors difficile de déterminer une PRI moyenne. Une solution pour rendre les histogrammes de DTOA moins sensibles aux fluctuations des PRI serait d'élargir les classes de l'histogramme afin de rassembler les DTOA correspondant à un même train d'impulsions dans un nombre limité de classes d'histogramme. Cependant, les signaux radar localement imbriqués se retrouveraient dans une même classe et il deviendrait impossible de les séparer.

Une deuxième technique est basée sur l'utilisation de la transformée de Fourier discrète appliquée aux temps d'arrivée, ou Time Of Arrival (TOA) selon l'expression anglo-saxonne, des impulsions. Cette technique est notamment décrite dans le brevet US 5,396,250 et dans le document Mardia H K: "New Techniques for the Deinterleaving of Repetitive Sequences", IEE Proceedings f. Communications, Radar & Signalprocessing, vol. 136, no. 4, PART F, 1 août 1989, pages 149-154, XP000052595. La transformée de Fourier permet de concentrer les DTOA d'un même train d'impulsions vers sa PRI moyenne et de séparer des trains d'impulsions de plusieurs radars localement imbriqués. La transformée de Fourier présente également l'avantage de n'être que faiblement gênée par des impulsions manquantes. Cependant, sans la connaissance *a priori* de la PRI ou de la PRI moyenne d'un signal radar, il est nécessaire de calculer la transformée de Fourier sur toute la plage de fréquences dans laquelle est susceptible de se trouver le signal radar. Le pas d'échantillonnage des fréquences de calcul doit au contraire être relativement petit afin de calculer la transformée de Fourier à une fréquence proche de la fréquence de répétition des impulsions (FRI) ou, le cas échéant, de la FRI moyenne. Par conséquent, le coût de calcul de la transformée de Fourier, étant proportionnel au produit du nombre d'impulsions par le nombre de fréquences de calcul, est généralement important et empêche un traitement dit en temps réel des signaux radar.

Un but de l'invention est notamment d'éviter tout ou partie des inconvénients précités en proposant une méthode fiable et rapide de séparation de trains d'impulsions radar. L'invention vise notamment à permettre la séparation de trains d'impulsions radar imbriqués, et dont les PRI fluctuent. A cet effet, l'invention a pour objet un procédé de séparation de trains d'impulsions radar datées, imbriquées, caractérisé en ce qu'il comprend :

- une étape de détermination d'une plage de recherche $\Delta f_c$ dans laquelle des fréquences de répétition des impulsions (FRI) sont susceptibles d'être identifiées, cette étape comportant les sous-étapes suivantes :

  ■ construire un histogramme de différences de temps d'arrivée (DTOA) comportant des classes, chaque classe étant définie par une plage de DTOA et regroupant les impulsions dont la durée les séparant des impulsions précédentes pour un ordre donné est comprise dans cette plage,
  ■ déterminer une plage de recherche $\Delta t_c$ bornée par la borne inférieure de la première classe contenant au moins une impulsion et par la borne supérieure de la dernière classe contenant au moins une impulsion,
  ■ déterminer une DTOA moyenne $DTOA_c$ comme la valeur moyenne de la plage de recherche $\Delta t_c$,
  ■ définir une fréquence de consigne $f_c$ comme étant égale à l'inverse de la DTOA moyenne $DTOA_c$,

  la plage de recherche $\Delta f_c$ étant définie conformément à la relation :

$$\Delta f_c = \left[ f_c - n.\delta f ; f_c + n.\delta f \right],$$

où $n = D \dfrac{\sqrt{DTOA_c{}^2 + \Delta t_c{}^2} - DTOA_c}{\Delta t_c . DTOA_c}$, D est la durée d'acquisition du signal radar s(t) et δf est un pas d'échantillonnage pour le calcul d'une transformée de Fourier discrète,
- une étape de calcul de ladite transformée de Fourier discrète sur la plage de recherche $\Delta f_c$, conformément à la relation :

$$S(f) = \left\| \sum_{k=1}^{N} \exp(2i\pi . TOA_k . f) \right\|,$$

où f est une fréquence, N est le nombre d'impulsions dans le signal radar et $TOA_k$ sont les instants d'arrivée des impulsions,
- une étape de séparation des trains d'impulsions à partir de leur FRI moyenne déterminées par la transformée de Fourier discrète.

Le procédé peut comporter une étape préalable de détermination du pas d'échantillonnage δf pour la transformée de Fourier discrète, le pas d'échantillonnage vérifiant la relation : $\delta f = \dfrac{1}{D}$.

Selon une forme particulière de réalisation, la plage de recherche $\Delta f_c$ est définie par la borne inférieure de la première classe contenant un nombre d'impulsions supérieur ou égal à un seuil prédéterminé, et par la borne supérieure de la dernière classe contenant un nombre d'impulsions supérieur ou égal au seuil prédéterminé.

Les classes de l'histogramme de DTOA peuvent avoir la même largeur de plage, cette largeur définit alors un pas d'histogramme $_{Ph}$, le pas d'histogramme $p_h$ étant déterminé de manière à être de l'ordre de 30 à 50 fois l'erreur de mesure et de quantification des instants d'arrivée $TOA_k$ des impulsions.

La plage de recherche $\Delta f_c$ peut en outre être limitée par une valeur minimale de borne inférieure $f_{min}$ telle que :

$$f_{min} = \dfrac{Q_{min}}{2.D\left(\sqrt{1 + Q_{min}{}^2} - 1\right)},$$ où $Q_{min}$ est le pourcentage minimal de jitter que l'on pense observer pour les trains d'impulsions du signal radar.

Selon une forme particulière de réalisation, seulement les composantes de la transformée de Fourier discrète (TFD) dont le module est supérieur à un seuil prédéterminé $S_{TFD}$ sont prises en compte pour la séparation des trains d'impulsions.

Le seuil prédéterminé $S_{TFD}$ peut être déterminé par la relation suivante : $S_{TFD} = G(J_{max}).(1 - T_{max}).D.f_{RI}$, où $J_{max}$ est le taux de jitter maximal admissible pour le train d'impulsions, $G(J_{max})$ est le gain de la TFD S(f) pour le taux de jitter maximal admissible $J_{max}$, et $Tm_{max}$ est le taux de mitage maximal admissible pour le train d'impulsions.

L'invention a notamment pour avantage qu'elle permet d'utiliser le pouvoir séparateur de la transformée de Fourier sans nécessiter un coût de calcul important.

L'invention sera mieux comprise et d'autres avantages apparaîtront à la lecture de la description détaillée d'un mode de réalisation donné à titre d'exemple, description faite en regard de dessins annexés qui représentent :

- la figure 1, des étapes possibles pour le procédé de séparation de trains d'impulsions selon l'invention ;
- la figure 2, des histogrammes de différences de temps d'arrivée (DTOA) d'impulsions pour deux pas d'histogramme différents ;
- la figure 3, un histogramme de DTOA pour un train d'impulsions avec une période de répétition des impulsions (PRI) fluctuant de 10% et la TFD calculée pour ce train d'impulsions ;
- la figure 4, un exemple d'interpolation de la TFD autour de sa composante de plus forte amplitude ;
- la figure 5, un histogramme de DTOA pour deux trains d'impulsions dont les PRI fluctuent de 10%, le premier train ayant une PRI moyenne de 100 μs et le deuxième train ayant une PRI moyenne de 102 μs ;
- la figure 6, le gain pour les composantes de la TFD voisines de son pic principal en fonction du taux de fluctuation de la PRI ;
- la figure 7, deux graphiques de phase tracés pour un signal radar comportant deux trains d'impulsions, le premier graphique donnant la phase du signal radar calculée à la PRI moyenne du premier train d'impulsions et le deuxième graphique donnant la phase du signal radar calculée à la PRI moyenne du deuxième train d'impulsions.

Pour la suite de la description, on considère un signal radar s(t), où t représente la variable temps. Le signal radar comporte N impulsions radar reçues et datées à leur arrivée pendant une durée d'acquisition D. Les impulsions radar sont par exemple reçues et datées par un récepteur de mesures. Chaque impulsion radar donne ainsi naissance à un instant d'arrivée $TOA_k$, avec k compris entre 1 et N. Les impulsions peuvent provenir d'un unique émetteur ou de plusieurs émetteurs, chaque émetteur fournissant un train d'impulsion dont la période de répétition des impulsions (PRI) est susceptible de fluctuer autour d'une PRI moyenne. Un train d'impulsions dont la PRI fluctue est appelé train à PRI jittée.

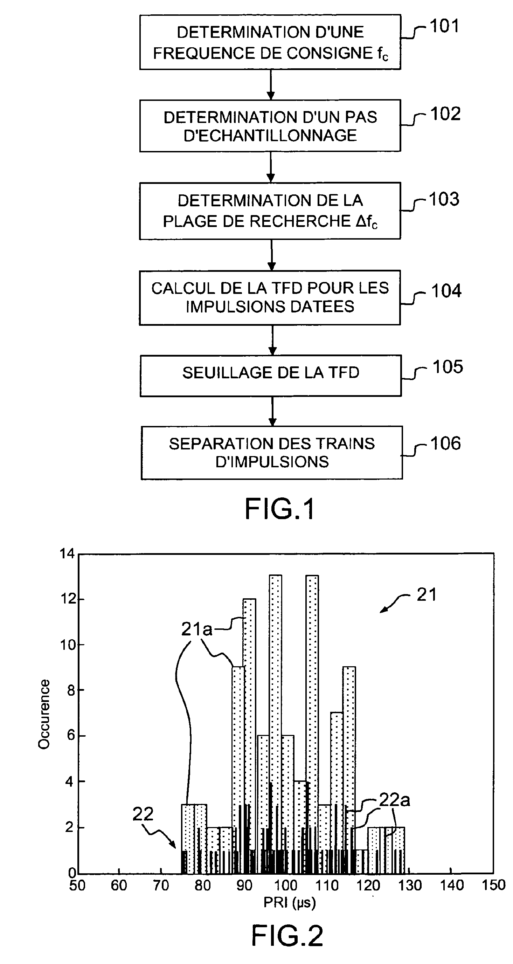

La figure 1 représente des étapes possibles pour le procédé de séparation de trains d'impulsions selon l'invention. Dans une première étape 101, on détermine une ou plusieurs fréquences de consigne $f_c$ autour desquelles sera calculée une transformée de Fourier discrète (TFD). Dans une deuxième étape 102, on détermine un pas d'échantillonnage $\delta f$ pour la TFD. Dans une troisième étape 103, on détermine une plage de recherche $\Delta f_c$ sur laquelle sera calculée la TFD. Dans une quatrième étape 104, on calcule une TFD pour les $TOA_k$ en fonction de la plage de recherche $\Delta f_c$ et du pas d'échantillonnage $\delta f$ déterminés précédemment. Dans une cinquième étape 105, la TFD est seuillée. Enfin, dans une sixième étape 106, la TFD seuillée est exploitée afin de déterminer les FRI des trains d'impulsions présents et de les séparer. Ces différentes étapes sont expliquées plus en détail dans la suite de la description.

### Détermination d'une fréquence de consigne

Le procédé de séparation de trains d'impulsions selon l'invention est basé sur le calcul de la transformée de Fourier discrète (TFD) appliquée aux instants d'arrivée $TOA_k$ des impulsions. Dans le cas d'un fonctionnement supervisé, c'est-à-dire lorsque la ou les fréquences de répétition des impulsions (FRI) du ou des trains d'impulsions sont connues *a priori*, la TFD peut n'être calculée qu'autour de cette ou de ces FRI. Le fonctionnement est par exemple supervisé lorsqu'un train d'impulsions a préalablement était détecté et caractérisé, et qu'il y a de fortes chances pour qu'il réapparaisse avec la même FRI. Au-delà de ce contexte de supervision, on cherche à déterminer une plage de fréquences dans laquelle des FRI sont susceptibles d'être identifiées. Cette plage de fréquences est appelée plage de recherche $\Delta f_c$. Elle est par exemple centrée sur une fréquence de consigne $f_c$.

Selon l'invention, on détermine dans une première étape 101 la fréquence de consigne $f_c$ à partir d'un histogramme de différence de temps d'arrivée (DTOA). Des histogrammes de DTOA peuvent être construits pour différents ordres. Le réglage de l'ordre dépend du contexte d'utilisation de l'invention. Un histogramme de DTOA d'ordre m donné est construit en déterminant, pour chaque impulsion arrivée à l'instant $TOA_k$, la durée la séparant de l'impulsion arrivée à l'instant $TOA_{k-m}$, c'est-à-dire sa DTOA d'ordre m, et en regroupant les impulsions de DTOA voisines au sein de classes, chaque classe étant définie par une plage de DTOA et par un nombre d'impulsions. Toutes les classes peuvent avoir la même largeur de plage. La largeur de plage définit alors un pas d'histogramme $p_h$. Avantageusement, le pas $p_h$ est choisi suffisamment large pour détecter un train d'impulsions à PRI jittée sur un faible nombre de classes adjacentes. En effet, si le pas d'histogramme $p_h$ est trop fin, les DTOA risquent d'être réparties sur de nombreuses classes non adjacentes. Il est alors difficile de différencier les classes pertinentes, c'est-à-dire celles contenant des DTOA correspondant effectivement à une valeur de PRI, des classes formées par le bruit, par exemple du fait d'impulsions manquantes. A l'inverse, le pas d'histogramme $p_h$ ne doit pas être trop large pour éviter le regroupement de toutes les impulsions dans une seule classe. Selon une forme particulière de réalisation, le pas d'histogramme $p_h$ est déterminé de manière à être de l'ordre de 30 à 50 fois cette erreur pour la détection de trains d'impulsions à PRI jittée. La plage de recherche $\Delta f_c$ pour le calcul de la TFD peut ainsi être déterminée à partir des classes de l'histogramme. En l'occurrence, on peut considérer une plage de recherche $\Delta f_c$ dans le domaine temporel (DTOA) définie par la borne inférieure de la première classe contenant au moins une impulsion et par la borne supérieure de la dernière classe contenant au moins une impulsion. La DTOA moyenne de la plage de recherche $\Delta f_c$ est appelée DTOA de consigne $DTOA_c$. La moyenne considérée est par exemple la moyenne arithmétique. La fréquence de consigne $f_c$ est alors définie par l'inverse de cette DTOA de consigne $DTOA_c$. La TFD est calculée autour de cette fréquence $f_c$ sur la plage de recherche $\Delta f_c$.

Avantageusement, seulement les classes dont le nombre d'occurrences dépasse un seuil prédéterminé sont prises en compte pour la détermination de la plage de recherche $\Delta f_c$. La plage de recherche $\Delta f_c$ est alors bornée par une DTOA minimale correspondant à la borne inférieure de la première classe contenant un nombre d'impulsions supérieur ou égal au seuil et par une DTOA maximale correspondant à la borne supérieure de la dernière classe contenant un nombre d'impulsions supérieur ou égal au seuil. Les classes contenant un nombre d'impulsions inférieur au seuil peuvent être considérées comme ne contenant aucune impulsion. Selon une forme particulière de réalisation de l'invention, si deux classes contenant un nombre d'impulsions supérieur ou égal au seuil sont séparées par au moins deux classes contenant un nombre d'impulsions inférieur au seuil, on considère deux plages de recherche distinctes $\Delta f_{c1}$ et $\Delta f_{c2}$.

La figure 2 illustre l'influence du pas sur la forme de l'histogramme de DTOA. Deux histogrammes sont représentés pour un même train de 100 impulsions avec une PRI moyenne de 100 microsecondes ($\mu$s) jittée de 30% ($\pm$ 15%

par rapport à la valeur centrale). Le premier histogramme 21 est construit avec un pas de 3 $\mu$s et le deuxième histogramme 22 est construit avec un pas de 0,3 $\mu$s. Sur cette figure, les classes du premier histogramme 21 sont notées 21a et les classes du deuxième histogramme sont notées 22a. En considérant un seuil fixé à quatre occurrences, la DTOA de consigne $DTOA_c$ serait déterminée autour de 100 $\mu$s et la plage de recherche $\Delta f_c$ serait comprise entre environ 88 $\mu$s et 118 $\mu$s, soit une largeur de plage de 30 $\mu$s.

## Détermination du pas d'échantillonnage

La fréquence de consigne $f_c$ ayant été déterminée, il reste notamment à déterminer le pas d'échantillonnage $\delta f$ des fréquences de calcul pour la transformée de Fourier discrète. La détermination du pas d'échantillonnage $\delta f$ fait l'objet de l'étape 102. Avec une durée d'acquisition des impulsions radar d'une durée D, la TFD calculée sur les $TOA_k$ des impulsions présente une largeur de lobe autour de la FRI moyenne au minimum égale à 2/D. En effet, lorsque la première et la dernière impulsion appartiennent à un même train d'impulsions, la durée effective du train d'impulsions est égale à D. La largeur du lobe principal de la TFD est alors égale à 2/D. En revanche, en présence de deux ou plusieurs trains d'impulsions imbriqués, la durée effective de l'un des trains d'impulsions peut être plus faible et donc le lobe principal de sa TFD peut être plus large que 2/D. A titre d'exemple, dans un signal radar de durée D contenant le mélange d'un train T1 de durée D1=D/2 et d'un train T2 de durée D2=D, le train T1 n'est présent qu'une partie de D et donc le lobe de la TF relatif à sa PRI aura une largeur de 4/D, bien plus large que celle à laquelle on pouvait s'attendre.

Afin de ne manquer aucun pic de la TFD, le pas d'échantillonnage $\delta f$ des fréquences de calcul doit être suffisamment petit. Il est par exemple fixé à la valeur inverse de la durée d'acquisition D du signal radar :

$$\delta f = \frac{1}{D} . \qquad (1)$$

## Détermination de la plage de recherche

La plage de recherche $\Delta f_c$ pour le calcul de la transformée de Fourier discrète est déterminée dans l'étape 103 à partir de la fréquence de consigne $f_c$ et du pas d'échantillonnage $\delta f$ , conformément à la relation suivante :

$$\Delta f_c = \left[ f_c - n.\delta f ; f_c + n.\delta f \right] \qquad (2)$$

avec

$$n = D \frac{\sqrt{DTOA_c{}^2 + \Delta t_c{}^2} - DTOA_c}{\Delta t_c . DTOA_c} . \qquad (2.1)$$

La plage de fréquences $\Delta f_c$ peut également être exprimée en pourcentage P du DTOA de consigne $DTOA_c$. Dans ce cas, la relation 2.1 devient :

$$n = D \frac{\sqrt{1 + P^2} - 1}{DTOA_c . P} . \qquad (2.2)$$

Il est à noter que la résolution en fréquence $\delta f$ de la TFD du signal radar s(t) étant constante sur toute la plage de recherche $\Delta f_c$ dans le domaine fréquentiel, la résolution en PRI $\delta pri$ ne l'est pas. En particulier, pour une résolution en fréquence $\delta f$ égale à 1/D, la résolution en PRI $\delta pri$ est :

$$\delta pri = \frac{PRI^2}{D} . \qquad (3)$$

La relation 3 montre que lorsque la PRI est grande, la résolution en PRI peut devenir insuffisante. Il existe donc une PRI limite $PRI_{max}$ au-delà de laquelle la TFD n'a plus une résolution suffisante. En raison du pouvoir concentrateur de la TFD, sa résolution est la plus grossière pour les faibles taux de jitter. La PRI limite $PRI_{max}$ est donc calculée par rapport au pourcentage minimal de jitter $Q_{min}$ que l'on pense observer dans le signal radar :

$$PRI_{max} = \frac{2.D\left(\sqrt{1+Q_{min}^2}-1\right)}{Q_{min}} \approx D.Q_{min} . \qquad (4)$$

Dans le domaine fréquentiel, elle correspond à une fréquence minimale $f_{min}$ au-dessous de laquelle il n'est pas nécessaire de calculer la TFD. Cette fréquence minimale $f_{min}$ est égale à l'inverse de $PRI_{max}$. Elle permet donc de limiter la plage de recherche $\Delta f_c$ définie à la relation 2.

Par ailleurs, le domaine d'application de la TFD peut être limité en fonction du nombre $N_{min}$ d'impulsions dans le signal radar. La TFD ne devrait normalement pas être calculée pour des fréquences correspondant à des PRI supérieures à $D/N_{min}$.

D'une manière générale, pour pouvoir estimer correctement un taux de jitter d'une PRI de $\pm$ J/2 % avec une TFD, il est nécessaire de disposer d'au moins 100/J impulsions. A titre d'exemple, il faut au moins 10 impulsions pour estimer correctement, avec la TFD, une PRI jittée de plus ou moins 5 %, ou il faut au moins 20 impulsions pour une PRI jittée de plus ou moins 2,5 %.

**Calcul de la transformée de Fourier discrète**

Dans une quatrième étape 104, on calcule la transformée de Fourier discrète S(f) du signal radar s(t) pour les instants d'arrivée $TOA_k$ des impulsions. Les composantes de la TFD S(f) sont calculées pour des fréquences f comprises dans la plage de recherche $\Delta f_c$ déterminée dans l'étape 103 avec le pas d'échantillonnage $\delta f$ déterminé lors de l'étape 102, conformément à la relation suivante :

$$S(f) = \left\| \sum_{k=1}^{N} \exp(2i\pi.TOA_k.f) \right\| . \qquad (5)$$

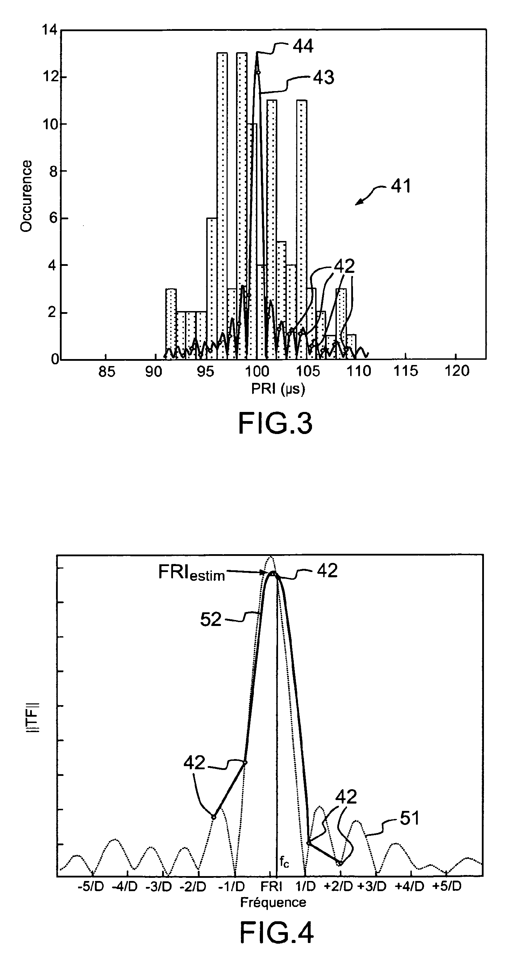

La figure 3 illustre l'effet de la TFD sur un train d'impulsions dont la PRI est jittée. Le train comporte 100 impulsions avec une PRI moyenne de 100 $\mu$s jittée de 10% ($\pm$ 5% de la valeur centrale). Sur la figure 3 est représenté un histogramme de DTOA 41 construit pour ce train d'impulsions avec un pas de 1 $\mu$s. L'histogramme présente un étalement important rendant difficile la détermination de la PRI moyenne du train. La TFD du signal radar est également représentée graphiquement sur la figure 3 par ses composantes 42 et par une interpolation de ses composantes 43. Le pas d'échantillonnage en fréquence choisi pour la TFD est 1/D. La TFD concentre son énergie autour de la PRI moyenne et permet de l'estimer avec une résolution de 1/D. Cette concentration d'énergie est visible sur la figure 3 par la présence d'un pic principal 44 autour de 100 $\mu$s. La composante 42 de plus forte amplitude peut être considérée comme la FRI moyenne. Sur la figure 3, la composante de plus forte amplitude correspond à une PRI environ égale à 100,2 $\mu$s. La FRI moyenne du train d'impulsions est donc environ égale à 9,98 kHz.

La composante 42 de plus forte amplitude ne correspond pas forcément au maximum de la transformée de Fourier non échantillonnée. Or même un écart très faible sur l'estimation de la FRI moyenne peut être gênant pour la suite du procédé. Afin de réduire cette erreur, il est possible d'interpoler la TFD autour de sa composante 42 de plus forte amplitude. La TFD peut par exemple être interpolée par une expression parabolique simple du fait de la forme pratiquement parabolique du pic principal. La figure 4 représente l'interpolation de la TFD autour de sa composante 42 de plus forte amplitude par une parabole. La fréquence de consigne $f_c$, les composantes 42 de la TFD, la transformée de Fourier non échantillonnée 51 et une parabole 52 interpolant la TFD sont tracées sur la figure 4 en fonction de la fréquence. Sur cette figure, la parabole 52 est construite à partir de la composante 42 de plus forte amplitude et de ses deux composantes 42 voisines.

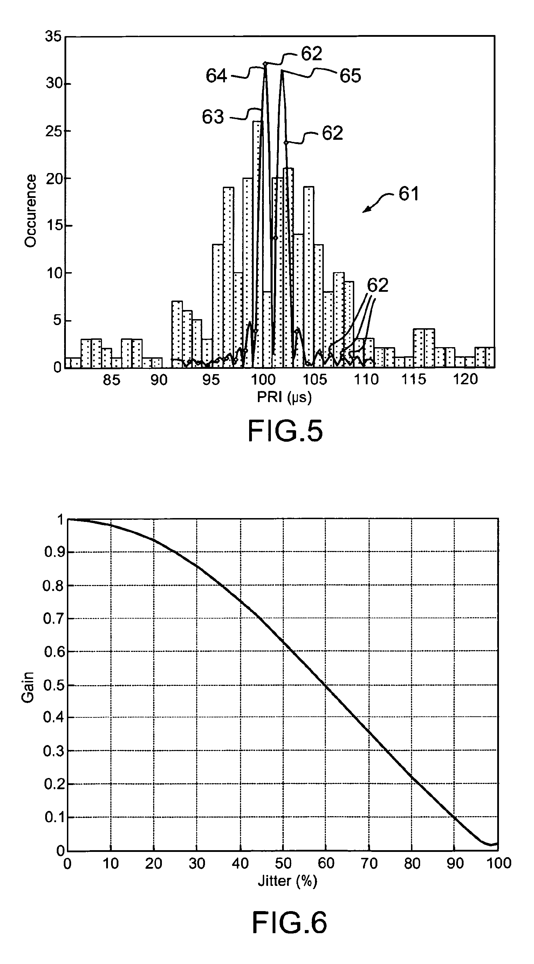

La figure 5 illustre, selon une représentation analogue à celle de la figure 3, l'effet de la TFD sur deux trains d'impulsions dont les PRI sont jittées de 10% ($\pm$ 5% de la valeur centrale). Chaque train comporte 50 impulsions. Le premier train a une PRI moyenne de 100 $\mu$s et le deuxième train une PRI moyenne de 102 $\mu$s. Un histogramme de DTOA 61 avec un pas de 1 $\mu$s est construit pour les deux trains d'impulsions. La figure 5 montre qu'il est impossible de déterminer les PRI moyennes à partir de l'histogramme 61. Sur cette figure est également représentée graphiquement la TFD appliquée aux deux trains d'impulsions, par ses composantes 62 et par une interpolation de ses composantes 63. Le pas d'échantillonnage en fréquence choisi pour la TFD est également de 1/D. La TFD présente deux pics principaux 64 et 65 centrés sur les PRI moyennes des deux trains d'impulsions. Il est alors possible de déterminer ces PRI moyennes à partir des composantes 62 de plus forte amplitude. En conséquence, en présence de plusieurs trains d'impulsions dont les PRI moyennes sont proches, le pouvoir de concentration de la TFD implique également un pouvoir de séparation des PRI.

La figure 6 illustre l'influence du taux de fluctuation de la PRI (jitter) sur le module de la TFD au niveau de son pic principal. Le gain G est tracé en fonction du taux de jitter en pourcent. La figure 6 montre que même avec un taux de jitter de 30% ($\pm$15% de la valeur centrale), le module ne perd que 15% de la valeur qu'il aurait en l'absence de jitter. Par ailleurs, le jitter a une influence relativement faible sur la forme du pic principal. Il n'affecte pas la résolution de la TFD, celle-ci ne dépendant que de la durée d'acquisition D du signal radar.

## Seuillage de la transformée de Fourier discrète

Une fois que la TFD a été calculée sur la plage de recherche $\Delta f_c$, il est possible de s'assurer que son maximum correspond bien à la FRI du signal radar s(t). A cet effet, le maximum de la TFD peut être comparé à un seuil $S_{TFD}$ dans une cinquième étape 105. Théoriquement, un train d'impulsions de fréquence de répétition des impulsions $f_{RI}$ observé sur une durée D donne un nombre d'impulsions égal au produit $D.f_{RI}$. Afin de prendre en compte l'absence d'impulsions, le produit $D.f_{RI}$ peut être pondéré par un coefficient de pondération. Ce coefficient prend par exemple en compte le taux de mitage maximal admissible $Tm_{max}$ ainsi que le gain G de la TFD S(f) en fonction du taux de jitter maximal admissible $J_{max}$ (représenté sur la figure 5), conformément à la relation suivante :

$$s_{TFD} = G(J_{max}).(1\text{-}Tm_{max}).D.f_{RI}. \qquad (6)$$

Par mitage, on entend le manque d'une ou plusieurs impulsions dans un train d'impulsions, par exemple dû à la non réception de cette ou de ces impulsions. Le taux de mitage est le pourcentage d'impulsions manquantes d'un train par rapport au nombre total d'impulsions de ce train. A titre d'exemple, pour un taux de jitter maximal admissible $J_{max}$ de 40%, correspondant à un gain G de 0,75, et un taux de mitage maximal admissible $Tm_{max}$ de 60%, le coefficient de pondération est égal à 0,3.

On peut ajouter à ce seuil un élément de dénombrement des impulsions appartenant à un train en fixant un nombre minimal d'impulsions $N_{min}$. Ce nombre $N_{min}$ est un réglage opérationnel. Il est par exemple égal à cinq. Le seuil devient alors :

$$s_{TFD} = \max(G(J_{max}).(1\text{-}Tm_{max}).D.f_{RI}, N_{min}). \qquad (7)$$

## Séparation des trains d'impulsions

Lorsqu'un signal radar comporte des impulsions appartenant à différents trains, c'est-à-dire provenant d'émetteurs différents, l'histogramme de DTOA construit dans l'étape 101 présente des classes disjointes ou non. Si les PRI des trains sont suffisamment différentes les unes des autres, les classes de l'histogramme forment des groupes de classes disjoints. Les impulsions de chaque train peuvent alors être séparées en fonction du groupe de classe auquel elles appartiennent. Il n'est alors pas nécessaire de calculer la TFD sur les $TOA_k$ de ces impulsions. En revanche, si les PRI des différents trains fluctuent et sont proches, les classes de l'histogramme ne forment qu'un seul groupe n'offrant donc plus de résolution. La TFD peut alors être calculée sur les $TOA_k$ des impulsions conformément à l'étape 104. La TFD permet d'observer deux pics disjoints lorsque l'écart de PRI est suffisamment grand par rapport à son pouvoir séparateur. Ses différents pics principaux permettent de déterminer précisément la PRI moyenne de chaque train d'impulsions. Cette connaissance permet alors, dans une étape 106, de séparer les impulsions relativement au train auquel elles appartiennent.

Selon une forme particulière de réalisation, la séparation des trains d'impulsions est effectuée en analysant la phase des impulsions. On entend par phase $\Phi_k$ d'une impulsion relativement à une PRI donnée, la quantité :

$$\Phi_k = TOA_k \bmod PRI, \qquad (8)$$

où l'opérateur mod définit le modulo.

Les impulsions appartenant à un même train ayant des instants d'arrivée $TOA_k$ successifs séparés par une durée sensiblement égale à la PRI moyenne de ce train, leur phase $\Phi_k$ est sensiblement constante sur toute la durée d'acquisition D du signal radar lorsqu'elle est calculée pour cette PRI moyenne. La phase peut ne pas être tout à fait constante du fait de la fluctuation de la PRI. Cependant, la phase évolue dans ce cas autour d'une valeur moyenne. En revanche, lorsque la phase $\Phi_k$ est calculée pour une PRI ne correspondant pas à la PRI moyenne d'un train, il n'y a pas de cohérence dans les instants d'arrivée $TOA_k$ des impulsions de ce train. La phase de ces impulsions n'est donc pas constante. Par conséquent, les impulsions dont la phase est constante peuvent être séparées et identifiées comme appartenant à un train dont la PRI moyenne est celle utilisée pour le calcul de la phase.

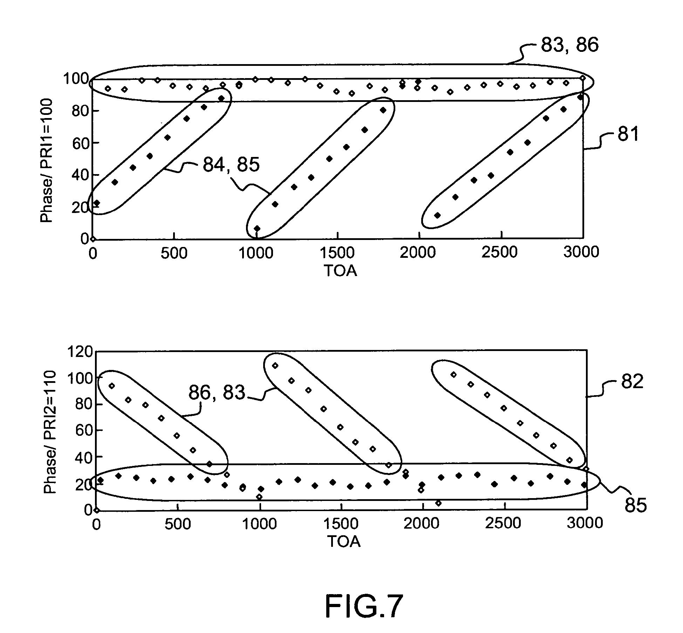

La figure 7 représente l'évolution de la phase des impulsions d'un signal radar en fonction de leur instant d'arrivée $TOA_k$ pour deux PRI différentes. Un premier graphique 81 est tracé pour une PRI de 100 $\mu$s, soit pour la PRI moyenne déterminée après transformation de Fourier pour un premier train d'impulsions, et le graphique 82 est tracé pour une PRI de 110 $\mu$s, soit pour la PRI moyenne déterminée après transformation de Fourier pour un deuxième train d'impulsions. Le graphique 81 permet de mettre en évidence la présence dans le signal radar du premier train d'impulsions 83 avec une PRI moyenne de 100 $\mu$s et de séparer les impulsions de ce premier train. Il met également en évidence la présence d'un ou plusieurs autres trains 84 avec une PRI différente de 100 $\mu$s. Le graphique 82 permet de mettre en évidence la présence du deuxième train d'impulsions 85 avec une PRI moyenne de 110 $\mu$s et de séparer les impulsions de ce deuxième train. Il met également en évidence la présence d'un ou plusieurs autres trains 86 avec une PRI différente de 110 $\mu$s. Sur cette figure 7, le train d'impulsions 84 correspond au deuxième train d'impulsions 85 et le train d'impulsions 86 correspond au premier train d'impulsions 83.

A la fin de l'étape 106, lorsqu'un ou plusieurs trains ont été séparés, le procédé de séparation des trains d'impulsions peut être réitéré à partir de l'étape 101. Chaque nouvelle itération est susceptible d'entraîner le calcul d'une TFD avec une plage de recherche en fréquence et un pas d'échantillonnage différents. La nouvelle TFD peut être mieux adaptée aux impulsions restantes.

**Revendications**

1. Procédé de séparation de trains d'impulsions radar datées, imbriquées, **caractérisé en ce qu'**il comprend :

  - une étape (103) de détermination d'une plage de recherche $\Delta f_c$ dans laquelle des fréquences de répétition des impulsions sont susceptibles d'être identifiées, cette étape comportant les sous-étapes suivantes :

    ■ construire un histogramme de différences de temps d'arrivée comportant des classes, chaque classe étant définie par une plage de différences de temps d'arrivée et regroupant les impulsions dont la durée les séparant des impulsions précédentes pour un ordre donné est comprise dans cette plage,
    ■ déterminer une plage de recherche $\Delta t_c$ bornée par la borne inférieure de la première classe contenant au moins une impulsion et par la borne supérieure de la dernière classe contenant au moins une impulsion,
    ■ déterminer une différence de temps d'arrivée moyenne $DTOA_c$ comme la valeur moyenne de la plage de recherche $\Delta f_c$,
    ■ définir une fréquence de consigne $f_c$ comme étant égale à l'inverse de la différence de temps d'arrivée moyenne $DTOA_c$,

    la plage de recherche $\Delta f_c$ étant définie conformément à la relation :

$$\Delta f_c = \left[ f_c - n.\delta f \, ; f_c + n.\delta f \right],$$

où $n = D \dfrac{\sqrt{DTOA_c{}^2 + \Delta t_c{}^2} - DTOA_c}{\Delta t_c.DTOA_c}$ , D est la durée d'acquisition du signal radar s(t) et $\delta f$ est un pas d'échantillonnage pour le calcul d'une transformée de Fourier discrète,

  - une étape (104) de calcul de ladite transformée de Fourier discrète sur la plage de recherche $\Delta f_c$, conformément à la relation :

$$S(f) = \left\| \sum_{k=1}^{N} \exp\left(2i\pi.TOA_k.f\right) \right\|,$$

où f est une fréquence, N est le nombre d'impulsions dans le signal radar et $TOA_k$ sont les instants d'arrivée des impulsions,

- une étape (106) de séparation des trains d'impulsions à partir de leur fréquence de répétition des impulsions moyenne déterminée par la transformée de Fourier discrète.

2. Procédé selon la revendication 1, **caractérisé en ce qu'**il comprend une étape préalable (102) de détermination du pas d'échantillonnage δf pour la transformée de Fourier discrète, le pas d'échantillonnage vérifiant la relation :

$$\delta f = \frac{1}{D}.$$

3. Procédé selon la revendication 1 ou 2, **caractérisé en ce que** la plage de recherche $\Delta f_c$ est définie par la borne inférieure de la première classe contenant un nombre d'impulsions supérieur ou égal à un seuil prédéterminé et par la borne supérieure de la dernière classe contenant un nombre d'impulsions supérieur ou égal au seuil prédéterminé.

4. Procédé selon l'une quelconque des revendications précédentes, **caractérisé en ce que** les classes de l'histogramme de différences de temps d'arrivée ont la même largeur de plage, cette largeur définissant un pas d'histogramme $P_h$, le pas d'histogramme $P_h$ étant déterminé de manière à être de l'ordre de 30 à 50 fois l'erreur de mesure et de quantification des instants d'arrivée $TOA_k$ des impulsions.

5. Procédé selon l'une quelconque des revendications précédentes, **caractérisé en ce que** la plage de recherche $\Delta f_c$ est limitée par une valeur minimale de borne inférieure $f_{min}$ telle que :

$$f_{min} = \frac{Q_{min}}{2.D\left(\sqrt{1+Q_{min}^2}-1\right)},$$

où $Q_{min}$ est le pourcentage minimal de jitter que l'on pense observer pour les trains d'impulsions du signal radar.

6. Procédé selon l'une quelconque des revendications précédentes, **caractérisé en ce que** seulement les composantes de la transformée de Fourier discrète dont le module est supérieur à un seuil prédéterminé $S_{TFD}$ sont prises en compte pour la séparation des trains d'impulsions.

7. Procédé selon la revendication 6, **caractérisé en ce que** le seuil prédéterminé $S_{TFD}$ est déterminé par la relation suivante :

$$S_{TFD} = G(J_{max}).(1-Tm_{max}).D.f_{RI},$$

où $J_{max}$ est le taux de jitter maximal admissible pour le train d'impulsions, $G(J_{max})$ est le gain de la transformée de Fourrier discrète S(f) pour le taux de jitter maximal admissible $J_{max}$, et $Tm_{max}$ est le taux de mitage maximal admissible pour le train d'impulsions.

**Claims**

1. A method for separating dated, interleaved radar pulse trains, **characterised in that** it comprises:

- a step (103) of determining a search range $\Delta f_c$ in which pulse repetition frequencies are likely to be identified, said step comprising the following sub-steps of:

  ■ constructing a histogram of differences of times of arrival, which comprises categories, each category being defined by a range of differences of times of arrival, and which groups the pulses for which the duration that separates them from the preceding pulses is included in said range for a given order,
  ■ determining a search range $\Delta f_c$ that is defined by the lower limit of the first category that contains at least one pulse and by the upper limit of the last category that contains at least one pulse,
  ■ determining a mean difference of time of arrival $DTOA_c$ as the mean value of the search range $\Delta f_c$,
  ■ defining a setpoint frequency $f_c$ as being equal to the reverse of the mean difference of time of arrival $DTOA_c$,

the search range $\Delta f_c$ being defined in accordance with the following relation:

$$\Delta f_c = \left[ f_c - n.\delta f ; f_c + n.\delta f \right],$$

where $n = D \dfrac{\sqrt{DTOA_c{}^2 + \Delta t_c{}^2} - DTOA_c}{\Delta t_c.DTOA_c}$, D is the duration of acquisition of the radar signal s(t) and $\delta f$ is a sampling step for the calculation of a discrete Fourier transform,

- a step (104) of calculating said discrete Fourier transform on the search range $\Delta f_c$, in accordance with the following relation:

$$S(f) = \left\| \sum_{k=1}^{N} \exp(2i\pi.TOA_k.f) \right\|,$$

where f is a frequency, N is the number of pulses in the radar signal and $TOA_k$ are the times of arrival of the pulses,
- a step (106) of separating pulse trains on the basis of their mean pulse repetition frequency that is determined by the discrete Fourier transform.

2. The method according to claim 1, **characterised in that** it comprises a prior step (102) of determining the sampling step $\delta f$ for the discrete Fourier transform, the sampling step verifying the following relation:

$$\delta f = \frac{1}{D}.$$

3. The method according to claim 1 or 2, **characterised in that** the search range $\Delta t_c$ is defined by the lower limit of the first category that contains a number of pulses that is greater than or equal to a predetermined threshold and by the upper limit of the last category that contains a number of pulses that is greater than or equal to a predetermined threshold.

4. The method according to any one of the preceding claims, **characterised in that** the categories of the histogram of differences of times of arrival have the same range width, said width defining a histogram step $p_h$, said histogram step $p_h$ being determined so as to be of the order of 30 to 50 times the error of measurement and of quantification of the times of arrival $TOA_k$ of the pulses.

5. The method according to any one of the preceding claims, **characterised in that** the search range $\Delta f_c$ is limited by a minimum lower limit $f_{min}$ value such that:

$$f_{min} = \frac{Q_{min}}{2.D\left(\sqrt{1+Q_{min}^2} - 1\right)},$$

where $Q_{min}$ is the minimum percentage of jitter that is expected to be observed for the pulse trains of the radar signal.

6. The method according to any one of the preceding claims, **characterised in that** only the components of the discrete Fourier transform for which the module is greater than a predetermined threshold $S_{TFD}$ are taken into account for the separation of the pulse trains.

7. The method according to claim 6, **characterised in that** the predetermined threshold $S_{TFD}$ is determined by the following relation:

$$S_{TFD} = G(J_{max}).(1-Tm_{max}).D.f_{RI,}$$

where $J_{max}$ is the maximum admissible jitter rate for the pulse train, $G(J_{max})$ is the gain of the discrete Fourier transform $S(f)$ for the maximum admissible jitter rate $J_{max}$, and $Tm_{max}$ is the maximum admissible spread rate for the pulse train.

**Patentansprüche**

1. Verfahren zum Trennen von datierten, verschachtelten Radarimpulsfolgen, **dadurch gekennzeichnet, dass** es Folgendes beinhaltet:

- einen Schritt (103) zum Ermitteln eines Suchbereichs $\Delta f_c$, in dem Impulswiederholfrequenzen identifiziert werden können, wobei der Schritt die folgenden Unterschritte beinhaltet:

■ Konstruieren eines Histogramms von Ankunftszeitdifferenzen, die Kategorien umfassen, wobei jede Kategorie durch einen Bereich von Ankunftszeitdifferenzen definiert ist, und das die Impulse gruppiert, deren Dauer, durch die sie von den vorhergehenden Impulsen getrennt sind, für eine gegebene Ordnung in diesem Bereich enthalten ist,
■ Ermitteln eines Suchbereichs $\Delta f_c$, definiert durch die Untergrenze der ersten Kategorie, die wenigstens einen Impuls enthält, und durch die Obergrenze der letzten Kategorie, die wenigstens einen Impuls enthält,
■ Ermitteln einer mittleren Ankunftszeitdifferenz $DTOA_c$ als Mittelwert des Suchbereichs $\Delta f_c$,
■ Definieren einer Sollfrequenz $f_c$ als die Umkehr der mittleren Ankunftszeitdifferenz $DTOA_c$,

wobei der Suchbereich $\Delta f_c$ gemäß der folgenden Beziehung definiert wird:

$$\Delta f_c = \left[f_c - n.\delta f ; f_c + n.\delta f\right],$$

wobei $n = D\dfrac{\sqrt{DTOA_c^2 + \Delta t_c^2} - DTOA_c}{\Delta t_c.DTOA_c}$, D die Erfassungsdauer des Radarsignals s(t) und $\delta f$ ein Abtastschritt für die Berechnung einer diskreten Fourier-Transformation ist,
- einen Schritt (104) des Berechnens der diskreten Fourier-Transformation an dem Suchbereich $\Delta f_c$ gemäß der folgenden Beziehung:

$$S(f) = \left\|\sum_{k=1}^{N} \exp(2i\pi.TOA_k.f)\right\|,$$

wobei f eine Frequenz ist, N die Anzahl von Impulsen in dem Radarsignal ist und $TOA_k$ die Ankunftszeiten der Impulse sind,
- einen Schritt (106) des Trennens von Impulsfolgen auf der Basis ihrer mittleren Impulswiederholfrequenz, die durch die diskrete Fourier-Transformation bestimmt wird.

2. Verfahren nach Anspruch 1, **dadurch gekennzeichnet, dass** es einen Vorabschritt (102) des Ermittelns des Abstastschrittes δf für die diskrete Fourier-Transformation beinhaltet, wobei der Abtastschritt die folgende Beziehung verifiziert:

$$\delta f = \frac{1}{D}.$$

3. Verfahren nach Anspruch 1 oder 2, **dadurch gekennzeichnet, dass** der Suchbereich $\Delta f_c$ durch die Untergrenze der ersten Kategorie, die eine Anzahl von Impulsen enthält, die gleich oder größer als ein vorbestimmter Schwellenwert ist, und die Obergrenze der letzten Kategorie definiert wird, die eine Anzahl von Impulsen enthält, die gleich oder größer ist als ein vorbestimmter Schwellenwert.

4. Verfahren nach einem der vorherigen Ansprüche, **dadurch gekennzeichnet, dass** die Kategorien des Histogramms von Ankunftszeitdifferenzen dieselbe Bereichsbreite haben, wobei diese Breite einen Histogrammschritt $p_h$ definiert, wobei der Histogrammschritt $p_h$ so bestimmt wird, dass er etwa das 30- bis 50fache des Mess- und Quantifizierungsfehlers der Ankunftszeiten $TOA_k$ der Impulse beträgt.

5. Verfahren nach einem der vorherigen Ansprüche, **dadurch gekennzeichnet, dass** der Suchbereich $\Delta f_c$ durch einen minimalen Untergrenzwert $f_{min}$ bestimmt wird, so dass:

$$f_{min} = \frac{Q_{min}}{2.D\left(\sqrt{1+Q_{min}^{2}}-1\right)},$$

wobei $Q_{min}$ der Mindestprozentanteil an Jittern ist, der für die Impulsfolgen des Radarsignals zu beobachten erwartet wird.

6. Verfahren nach einem der vorherigen Ansprüche, **dadurch gekennzeichnet, dass** nur die Komponenten der diskreten Fourier-Transformation, deren Modul größer ist als ein vorbestimmter Schwellenwert $S_{TFD}$, für die Trennung der Impulsfolgen berücksichtigt werden.

7. Verfahren nach Anspruch 6, **dadurch gekennzeichnet, dass** der vorbestimmte Schwellenwert $S_{TFD}$ durch die folgende Beziehung bestimmt wird:

$$s_{TFD} = G(J_{max}).(1\text{-}Tm_{max}).D.f_{RI},$$

wobei $J_{max}$ die maximal zulässige Jitter-Rate für die Impulsfolge ist, $G(J_{max})$ die Verstärkung der diskreten Fourier-Transformation S(f) für die maximal zulässige Jitter-Rate $J_{max}$ ist und $Tm_{max}$ die maximal zulässige Streurate für die Impulsfolge ist.

```
┌─────────────────────────────┐
│   DETERMINATION D'UNE       │──⌐ 101
│   FREQUENCE DE CONSIGNE fc  │
└─────────────────────────────┘
              │
              ▼
┌─────────────────────────────┐
│   DETERMINATION D'UN PAS    │──⌐ 102
│   D'ECHANTILLONNAGE         │
└─────────────────────────────┘
              │
              ▼
┌─────────────────────────────┐
│   DETERMINATION DE LA       │──⌐ 103
│   PLAGE DE RECHERCHE Δfc    │
└─────────────────────────────┘
              │
              ▼
┌─────────────────────────────┐
│   CALCUL DE LA TFD POUR LES │──⌐ 104
│   IMPULSIONS DATEES         │
└─────────────────────────────┘
              │
              ▼
┌─────────────────────────────┐
│   SEUILLAGE DE LA TFD       │──⌐ 105
└─────────────────────────────┘
              │
              ▼
┌─────────────────────────────┐
│   SEPARATION DES TRAINS     │──⌐ 106
│   D'IMPULSIONS              │
└─────────────────────────────┘
```

**FIG.1**

**FIG.2**

FIG.3

FIG.4

FIG.5

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5396250 A

**Littérature non-brevet citée dans la description**

- **Mardia H K.** New Techniques for the Deinterleaving of Repetitive Sequences. *IEE Proceedings f. Communications, Radar & Signalprocessing,* 01 Août 1989, vol. 136 (4), 149-154